# EUROPÄISCHE PATENTSCHRIFT

(11) **EP 4 045 406 B1**
(45) Veröffentlichungstag und Bekanntmachung des Hinweises auf die Patenterteilung: **13.09.2023**
(21) Anmeldenummer: 21714096.1
(22) Anmeldetag: 03.03.2021
(51) Int. Cl.: B64D 11/06, B60N 2/68

(54) **FLUGGASTSITZ MIT EINER STECKVERBINDUNG**
AIRCRAFT PASSENGER SEAT WITH A PLUG CONNECTION
SIÈGE PASSAGER D'AÉRONEF AVEC CONNECTION ENFICHABLE

(30) Priorität: 05.03.2020 DE 102020106035
(43) Veröffentlichungstag der Anmeldung: 24.08.2022
(73) Patentinhaber: ZIM Aircraft Seating GmbH, 88090 Immenstaad am Bodensee (DE)
(72) Erfinder: JENSEN, Alexander, 88046 Friedrichshafen (DE)
(74) Vertreter: Otten, Roth, Dobler & Partner mbB Patentanwälte
(86) Internationale Anmeldenummer: PCT/EP2021/055370
(87) Internationale Veröffentlichungsnummer: WO 2021/175939

(56) Entgegenhaltungen:
- EP-A1- 3 459 852
- EP-B1- 3 459 852
- DE-A1-102008 020 156
- DE-T2- 69 604 620
- US-A- 5 253 923
- US-A1- 2017 297 456

## Beschreibung

Die Erfindung betrifft einen Fluggastsitz mit einer Verbindungsvorrichtung sowie eine Sitzreihe gebildet aus mehreren solcher Fluggastsitze.

### Stand der Technik

Zur Ausstattung von Passagierflugzeugen sind Fluggastsitze oder Sitzreihen aus mehreren nebeneinander angeordneten Fluggastsitzen bekannt. Die Fluggastsitze können eine Vielzahl von Ausführungsformen aufweisen. Fluggastsitze sind beispielsweise aus der EP 3 459 852 A1 oder der US 2017/0297456 A1 bekannt. Die DE 10 2008 020 156 A1 zeigt einen bekannten Fahrzeugsitz.

Alle Fluggastsitze müssen Sicherheitsrichtlinien entsprechen. Gleichzeitig sollen die Sitze ein möglichst geringes Gewicht aufweisen. Außerdem ist eine kompakte Außenform erwünscht.

Der Fluggastsitz sollte derart aufgebaut sein, dass er in den Sicherheitsrichtlinien vorgesehenen Tests, insbesondere Crash-Tests besteht. Hierzu sind stabile Verbindungen zwischen verschiedenen Bauteilen des Fluggastsitzes notwendig.

Beispielsweise ist am Fluggastsitz ein Sicherheitsgurt vorhanden. Der Sicherheitsgurt ist bevorzugt als Beckengurt ausgebildet und z.B. mit einem Gestell und/oder einem Sitzteiler des Fluggastsitzes an zum Beispiel zwei Gurtanbindungspunkten verbunden.

### Aufgabe und Vorteile der Erfindung

Aufgabe der vorliegenden Erfindung ist es, einen verbesserten Fluggastsitz mit erhöhter Stabilität bereitzustellen.

Die Aufgabe wird durch die Merkmale des unabhängigen Anspruchs 1 gelöst.

In den abhängigen Ansprüchen sind zweckmäßige und vorteilhafte Varianten und Ausführungsformen der Erfindung angegeben.

Nachfolgend werden alle Richtungen in Bezug zu einer Sitzrichtung angegeben, wobei unter der Sitzrichtung die Richtung zu verstehen ist, in welcher ein Fluggast blickt, wenn er in dem Fluggastsitz sitzt.

Die Erfindung geht aus von einem Fluggastsitz mit einem Gestell, das zur Befestigung an einem Boden einer Fluggastkabine vorgesehen ist, wobei das Gestell einen Sitzteiler und quer zur Sitzrichtung verlaufende Holme umfasst, wobei der Sitzteiler durch die Holme gehalten ist, wobei eine Umhausung mit einem Strukturbauteil vorgesehen ist, wobei die Umhausung eine Rückenlehne zumindest teilweise umgibt.

Vorzugsweise umfasst der Fluggastsitz eine Kopfstütze, eine Rückenlehne, einen Sitzboden und eine Beinauflage. Diese zum Beispiel vier wesentlichen Teile des Fluggastsitzes sind bevorzugt über Beschläge und/oder Gelenke miteinander verbunden, vorteilhafterweise einstellbar, insbesondere gegeneinander verstellbar.

Mit unten wird der Boden der Fluggastkabine bezeichnet, während oben eine entgegengesetzte Position bezeichnet, welche insbesondere vertikal beabstandet zu unten ist.

Bevorzugterweise sind das Strukturbauteil, der Sitzteiler und die Holme aus einem Metallmaterial, vorteilhafterweise aus Aluminium, einem anderen leichten und stabilen Material, und/oder zum Beispiel aus einem Verbundwerkstoff, insbesondere aus einem Kohlefaserverbundwerkstoff hergestellt. Vorteilhafterweise sind alle Bauteile des Fluggastsitzes im Hinblick auf ihre Materialien und das damit verbundene Gewicht optimiert. Insbesondere ist auch die Form der Bauteile hinsichtlich des Gewichts optimiert, so dass die Bauteile zum Beispiel gezielt gewählte Materialausnehmungen aufweisen, welche zu einer Gewichtsersparnis des jeweiligen Bauteils beitragen.

Der Fluggastsitz ist mit dem Gestell am Boden einer Fluggastkabine anordenbar. Das Gestell umfasst den Sitzteiler und quer zur Sitzrichtung verlaufende Holme, wobei ein erster vorderer Holm und ein zweiter, in Sitzrichtung gesehen, dahinter angeordneter Holm vorhanden sind. Vorzugsweise sind beide Holme am Sitzteiler angeordnet. Vorteilhafterweise verlaufen die zwei Holme beabstandet, insbesondere mehrheitlich parallel zueinander.

Der Sitzteiler ist als ein mechanisch stabiles Bauteil des Fluggastsitzes ausgebildet. Insbesondere ist der Sitzteiler dazu ausgelegt, Kräfte welche bei einem Crash auf den Fluggastsitz wirken, aufzunehmen und/oder in Richtung des Bodens der Fluggastkabine zu leiten.

Der Sitzteiler weist in Sitzrichtung gesehen eine Höhe, eine Breite und eine Tiefe auf. Die Breite des Sitzteilers ist bevorzugt kleiner als die Tiefe des Sitzteilers. Beispielsweise ergibt sich die Höhe des Sitzteilers aus einer Abmessung in vertikaler Richtung in Bezug zum Fluggastsitz. Bevorzugt beträgt die Höhe des Sitzteilers ein Vielfaches der Breite und/oder der Tiefe des Sitzteilers.

Am Sitzteiler ist die Umhausung fest angeordnet. Die Umhausung umfasst das Strukturbauteil. Die Umhausung umgibt zumindest teilweise die Rückenlehne des Fluggastsitzes.

Der Fluggastsitz umfasst die Umhausung, welche im Bereich der Rückenlehne angeordnet ist. Die Rückenlehne ist im Bereich der Umhausung, relativ zur Umhausung verstellbar. Beispielsweise ist die Rückenlehne im Bereich der Umhausung relativ zur Umhausung beweglich geführt. Bevorzugterweise ist die Umhausung feststehend in der Fluggastkabine vorhanden, z.B. positionsfest und insbesondere nicht beweglich bei der Verstellung der Rückenlehne. In einer vorteilhaften Ausführungsvariante ist die Umhausung am Sitzteiler anordenbar. Bevorzugt verdeckt die Umhausung das Strukturbauteil, welches zum Beispiel innerhalb der Umhausung angeordnet ist. Beispielsweise ist die Umhausung schalenförmig und/oder u-förmig ausgebildet.

Bevorzugt sind pro Fluggastsitz zwei Sitzteiler vorhanden. Beispielsweise sind die beiden Sitzteiler beabstandet voneinander angeordnet. Bevorzugt sind die beiden Sitzteiler parallel zueinander angeordnet. Vorteilhafterweise sind zwei Ebenen, jeweils aufgespannt aus der Höhe und der Tiefe des Sitzteilers, zumindest annähernd, parallel zueinander angeordnet. Insbesondere wird der Fluggastsitz an beiden Seiten, insbesondere außen, durch die Sitzteiler begrenzt, vorteilhafterweise im Bereich des Sitzbodens. Bevorzugterweise ist der Sitzteiler derart mechanisch belastbar ausgeführt, dass beispielsweise am Sitzteiler die Gurtanbindungspunkte für den Sicherheitsgurt des Fluggasts anordenbar sind, z.B. anschraubbar sind.

Am Sitzteiler ist in einer vorteilhaften Ausführungsform das Strukturbauteil angeordnet. Beispielsweise ist das Strukturbauteil oberhalb an den Sitzteiler anschließend angeordnet. Insbesondere weist das Strukturbauteil eine Breite, eine Höhe und eine Tiefe auf. Bevorzugt ist das Strukturbauteil streifenförmig ausgebildet, z.B. ist die Höhe ein Vielfaches der Tiefe und/oder der Breite des Strukturbauteils.

Der Kern der Erfindung ist, dass der Sitzteiler mit dem Strukturbauteil über eine Verbindungsvorrichtung verbunden ist, wobei die Verbindungsvorrichtung als eine Steckverbindung ausgebildet ist.

Bevorzugterweise ist die Verbindungsvorrichtung als die Steckverbindung ausgebildet. Durch die Verbindungsvorrichtung wird vorteilhafterweise eine sehr stabile Verbindung zwischen dem Sitzteiler und dem Strukturbauteil erreicht. Insbesondere ist die Verbindungsvorrichtung dazu vorgesehen Kräfte, welche bei einem Crash entstehen können, aufzunehmen und/oder über den Sitzteiler auf das Stützbein und/oder den Kabinenboden zu übertragen. Weiter ermöglicht die Verbindungsvorrichtung einen einfachen und/oder schnellen Zusammenbau aus mehreren Teilen bei der Montage des Fluggastsitzes. Vorteilhafterweise sind die Sitzteiler und die Strukturbauteile separat vormontierbare Bauteile des Fluggastsitzes.

In einer vorteilhaften Ausführungsform ist an jedem Sitzteiler des Fluggastsitzes die Verbindungsvorrichtung, insbesondere die Steckverbindung angeordnet.

In einer vorteilhaften Ausgestaltung wird das Strukturbauteil von der Umhausung, zumindest teilweise verdeckt. Die Umhausung ist in einer vorteilhaften Ausführungsform aus Kunststoff hergestellt. So kann beinahe jede beliebige Form der Umhausung realisiert werden. Durch die Umhausung ergibt sich beispielsweise ein angenehmeres Sitzen auf einem dahinter angeordneten Fluggastsitz. Ein dort sitzender Fluggast wird vorteilhafterweise durch eine Verstellung der Rückenlehne des in Sitzrichtung gesehenen vorderen Fluggastsitzes nicht wesentlich beeinträchtig oder gestört, da die Umhausung vorteilhafterweise positionsfest ausgeführt ist.

In einer vorteilhaften Ausführungsform umfasst die Verbindungsvorrichtung ein erstes Steckelement und ein zweites Steckelement, wobei das erste Steckelement am Sitzteiler angeordnet ist und das zweite Steckelement am Strukturbauteil angeordnet ist.

Vorteilhafterweise umfasst die Steckverbindung das erste und das zweite Steckelement. Beispielsweise ist das erste Steckelement einstückig am und/oder aus dem oberen Ende des Sitzteilers angeordnet, insbesondere gebildet. Insbesondere wird das erste Steckelement aus dem Material des Sitzteilers gebildet und/oder ausgeformt, zum Beispiel ausgefräst. Alternativ ist das erste Steckelement an dem oberen Ende des Sitzteilers anbringbar, insbesondere anschraubbar, und/oder annietbar.

Vorteilhafterweise ist das zweite Steckelement am Strukturbauteil angeordnet. Insbesondere ist das zweite Steckelement am Strukturbauteil fixiert, bevorzugt unlösbar, zum Beispiel mittels Niete. In einer weiteren Ausführungsvariante ist das zweite Steckelement zum Beispiel aus dem Strukturbauteil gebildet und/oder ausgeformt und/oder einstückig am Strukturbauteil angeordnet.

Bevorzugterweise ist die Verbindungsvorrichtung als eine Art Nut-und-Feder-Verbindung ausgebildet.

Insbesondere ist die Steckverbindung als eine Art Nut-und-Feder-Verbindung ausgebildet. Beispielsweise ist das erste Steckelement als eine Feder der Nut-und-Feder-Verbindung ausgebildet. Bevorzugt handelt es sich beim ersten Steckelement, ausgebildet als die Feder, um ein Trennelement, welches vorteilhafterweise eine abgeschrägte Aufsteck-Fläche, zum Beispiel ausgebildet als Fase, aufweist. Vorteilhafterweise ist das zweite Steckelement als eine Art Nut in der Nut-und-Feder-Verbindung ausgebildet. Beispielsweise umfasst das zweite Steckelement eine Öffnung, insbesondere eine schlitzartige Ausnehmung, vorteilhafterweise eine Nut. Bevorzugt wird die Nut von gegenüberliegenden Wänden bzw. Wangen gebildet und/oder begrenzt.

Weiter bevorzugt ist das erste Steckelement im zweiten Steckelement anordenbar, insbesondere wenn es sich um die Nut-Feder-Verbindung handelt. Bevorzugterweise ist das erste Steckelement im zweiten Steckelement einsteckbar, insbesondere vollständig einsteckbar, und/oder versenkbar, insbesondere komplett versenkbar.

In einer bevorzugten Ausführungsvariante ist das erste Steckelement am Sitzteiler angeordnet, wobei das erste Steckelement eine Ausnehmung umfasst, wobei die Ausnehmung in Sitzrichtung gesehen eine Tiefe von mindestens 50% der Tiefe des Sitzteilers aufweist.

Vorteilhafterweise umfasst das erste Steckelement die Ausnehmung. Bevorzugt ist das erste Steckelement mit der Ausnehmung im oberen Bereich des Sitzteilers angeordnet, insbesondere am oberen Ende. Bevorzugt ist auf beiden Seiten des ersten Steckelements jeweils eine Ausnehmung angeordnet. Insbesondere sind die zwei Ausnehmungen gegenüberliegend angeordnet. Vorteilhafterweise ist zwischen den Ausnehmungen das Trennelement angeordnet, insbesondere grenzen die Ausnehmungen auf beiden Seiten an das Trennelement an. Beispielsweise beträgt die Ausnehmung 50%, 60%, 70%, 80%, 85%, 90%, 95%, 99%, 100% der Tiefe des Sitzteilers, in Sitzrichtung gesehen. Insbesondere sind auch weitere, beliebige Werte zwischen 50% und 100% möglich. Vorteilhafterweise ist eine Höhe der Ausnehmung ungefähr genauso groß wie die Tiefe der Ausnehmung. Zum Beispiel weist die Ausnehmung eine Breite auf, welche insbesondere 10% bis 40%, bevorzugt 25% der Breite des Sitzteilers entspricht. Bevorzugt ergeben zwei Ausnehmungen zusammen eine Breite zwischen 20% und 80%, bevorzugt 50% der Breite des Sitzteilers, insbesondere sind auch weitere beliebige Werte zwischen 20% und 80% möglich. Vorteilhafterweise sind die Ausnehmungen auf den beiden Seiten des Sitzteilers ähnlich, insbesondere gleich ausgeführt. Auf Grund der vorteilhaften Ausgestaltung mit gegenüberliegenden Ausnehmungen, ergibt sich ein Bereich zwischen den beiden Ausnehmungen, das Trennelement, der ebenfalls ca. 50% der Breite des Sitzteilers entspricht. Beispielsweise beträgt die Breite des Trennelements Werte zwischen 20% und 80% der Breite des Sitzteilers. Vorteilhafterweise entspricht die Breite von zwei Ausnehmungen und die Breite des Trennelements der Breite des Sitzteilers.

Vorteilhafterweise umfasst das Trennelement eine Durchführung, zum Beispiel ein Loch. Mittels der Durchführung, ausgebildet z.B. als Schraubloch, ist die Steckverbindung im angeordneten Zustand der beiden Steckelemente fixierbar. Bevorzugt sind mehrere, insbesondere vier Durchführungen in den beiden Steckelementen zur Fixierung vorhanden. Vorteilhafterweise ist am Trennelement eine weitere Öffnung, insbesondere als größeres Loch angeordnet. Beispielsweise ist das größere Loch zur Materialersparnis und somit zur Gewichtsreduktion des Bauteils vorgesehen.

In einer bevorzugten Ausführungsform umfasst das zweite Steckelement eine Zunge. Vorteilhaft ist die Zunge am zweiten Steckelement ausgebildet, insbesondere einstückig. In einer bevorzugten Ausführungsvariante umfasst das zweite Steckelement mehrere Abschnitte, insbesondere zwei Abschnitte. Beispielsweise sind ein oberer Abschnitt und ein unterer Abschnitt vorhanden. Zum Beispiel ist der obere Abschnitt als eine Anbindungsfläche an das Strukturbauteil ausgebildet. Insbesondere ist der untere Abschnitt des zweiten Steckelements als die Zunge ausgebildet. Beispielsweise ist die Zunge an der Ausnehmung des ersten Steckelements am Sitzteiler anordenbar. Bevorzugt ist die Zunge als Gegenstück zum ersten Steckelement ausgebildet. Insbesondere sind beide Steckelemente derart ausgebildet, dass sie formschlüssig zusammen wirken. Bevorzugterweise bilden die beiden Steckelemente im angeordneten Zustand einen Steckzustand. Die Zunge weist eine Höhe auf, welche vorteilhafterweise der Höhe der Ausnehmung des ersten Steckelements am Sitzteiler entspricht. Die sich im Steckzustand berührenden Flächen der beiden Steckelemente, z.B. die Ausnehmung des ersten Steckelements und eine Seitenfläche der Zunge sind Kontaktflächen des ersten und/oder zweiten Steckelements.

In einer vorteilhaften Ausführungsform umfasst das erste Steckelement genau eine Ausnehmung und das zweite Steckelement genau eine Zunge. Bevorzugterweise bilden die genau eine Ausnehmung und die genau eine Zunge die Verbindungsvorrichtung, insbesondere die Steckverbindung.

Bevorzugt umfasst das zweite Steckelement zwei Zungen, wobei die Zungen beabstandet voneinander am Strukturbauteil angeordnet sind. Insbesondere wird der Abstand der beiden Zungen bestimmt durch die Breite des Strukturbauteils an einer Anbindungsstelle. Vorzugsweise wird die Art Nut der Nut-und-Feder-Verbindung durch den Freiraum zwischen zwei Zungen gebildet.

In einer vorteilhaften Ausführungsform weist die Zunge eine Höhe auf, welche 50% bis 150% der Tiefe der Ausnehmung am ersten Steckelement beträgt. Beispielsweise beträgt die Höhe der Zunge 30% bis 200% der Tiefe der Ausnehmung, vorzugsweise 75% bis 125%, insbesondere 100% der Tiefe der Ausnehmung.

Vorteilhaft weisen die beiden Zungen zusammen eine Breite von ungefähr 50% der Breite des Sitzteilers auf. Insbesondere weist jede Zunge für sich eine Breite zwischen 10% und 40% der Breite des Sitzteilers auf, insbesondere 25% der Breite des Sitzteilers.

Bevorzugt weist das zweite Steckelement eine Höhe zwischen 150% und 500% der Höhe der Zunge, beispielsweise 200% bis 400%, bevorzugt 300% auf.

Vorteilhafterweise umfasst das erste Steckelement eine Führungsfläche. Beispielsweise ist die Führungsfläche als ein im Vergleich zur Fläche der Ausnehmung überstehender Bereich ausgebildet. Insbesondere ist die Führungsfläche eine Begrenzung der Fläche der Ausnehmung. Vorteilhafterweise steht die Führungsfläche winklig von der Fläche der Ausnehmung ab. Die Fläche der Ausnehmung ist im Steckzustand die Kontaktfläche des ersten Steckelements.

In einer bevorzugten Ausführungsform umfasst das erste Steckelement mehrere Führungsflächen, insbesondere zwei, welche gegenüberliegend zueinander ausgebildet sind. Beispielsweise sind die zwei gegenüberliegenden Führungsflächen annähernd vertikal ausgebildet, bezogen auf die Ausrichtung des Fluggastsitzes. Vorteilhafterweise sind die zwei Führungsflächen als eine vordere Führungsfläche und eine hintere Führungsfläche ausgebildet, wobei die Richtung in Bezug zur Sitzrichtung gewählt ist. Bevorzugterweise ist die in Sitzrichtung gesehen, hintere Führungsfläche derart ausgebildet, dass die hintere Führungsfläche von dem unteren Ende des ersten Steckelements bis zum oberen Ende des ersten Steckelements sich erstreckt. Vorteilhaft gleitet an der hinteren Führungsfläche das zweite Steckelement beim Zusammenfügen der Verbindungsvorrichtung entlang.

Weiter bevorzugt ist die in Sitzrichtung gesehene, vordere Führungsfläche schräg, insbesondere winklig zur Verbindungsfläche, ausgebildet. Hierdurch ergibt sich vorteilhaft, dass das zweite Steckelement beim Zusammenfügen der Steckverbindung an dieser Führungsfläche entlang geführt wird, insbesondere entlang gleitet. Beispielsweise ist am oberen Ende der vorderen Führungsfläche eine Anlaufschräge in Form einer Krümmung mit einem Radius vorhanden, wobei die Anlaufschräge das Zusammenfügen der Steckverbindung erleichtert.

In einer vorteilhaften Ausführungsvariante weisen die zwei Steckelemente im angeordneten Zustand ungefähr die gleiche Breite wie der Sitzteiler auf. Bevorzugt weisen die zwei Steckelemente im zusammengefügten Zustand eine Breite auf, welche ungefähr gleich ist, wie die Breite des Sitzteilers. Vorteilhafterweise weisen die beiden Steckelemente im Steckzustand eine Breite gleich der Breite des Sitzteilers auf.

In einer vorteilhaften Ausführungsform weist das erste Steckelement im Bereich der Ausnehmung eine Breite von 10% bis 80%, insbesondere 50% der Breite des Sitzteilers auf. Bevorzugt weist das erste Steckelement zwei gegenüberliegende Ausnehmungen auf. Diese beiden Ausnehmungen entsprechen z.B. zusammen ungefähr der Hälfte der Breite des Sitzteilers. Insbesondere entspricht jede Ausnehmung zwischen 10% und 40% der Breite des Sitzteilers, bevorzugt 25%. Bevorzugt ergibt sich die Breite des Trennelements aus der Breite des ersten Steckelements, insbesondere der Breite des Sitzteilers unterhalb der Ausnehmung, abzüglich der Breite der beiden Ausnehmungen.

Bevorzugterweise umfasst das erste Steckelement ein oberes und ein unteres Ende, wobei das obere Ende mindestens eine abgeschrägte Aufsteck-Fläche umfasst und das untere Ende eine zur Fläche der Ausnehmung abstehende Fläche ist. Vorteilhaft ist das obere Ende als eine Aufsteck-Schräge ausgebildet. Bevorzugt ist das obere Ende an beiden Seiten als jeweils eine abgeschrägte Aufsteck-Fläche, zum Beispiel eine Fase, ausgebildet. Insbesondere sind die beiden Aufsteck-Flächen winklig zueinander angeordnet, zum Beispiel dachförmig. Beispielsweise sind die abgeschrägten Aufsteck-Flächen am obersten Ende des ersten Steckelements näher zusammen als in Richtung des unteren Endes der Ausnehmung.

In einer vorteilhaften Ausführungsform umfasst das erste Steckelement an seinem unteren Ende der Ausnehmung eine Verbindungsfläche. Bevorzugterweise ist die Verbindungsfläche als eine zur Fläche der Ausnehmung abstehende Fläche ausgebildet. Bevorzugt ist die Verbindungsfläche horizontal ausgerichtet, insbesondere annähernd parallel zum Boden der Fluggastkabine ausrichtbar. Vorteilhafterweise sind die zwei gegenüberliegenden Führungsflächen durch die Verbindungsfläche miteinander verbunden. Bevorzugterweise sind eine der Führungsflächen und die angrenzende Verbindungsfläche durch eine Krümmung verbunden, vorteilhaft ausgebildet als Kreisabschnitt, insbesondere mit einem Radius. Insbesondere sind die zwei Führungsflächen mit der Verbindungsfläche mit zwei verschiedenen Radien miteinander verbunden. Möglich sind auch zwei gleiche Radien. Besonders bevorzugt ist ein im Vergleich zum anderen Radius größerer Radius in der vorderen Krümmung und ein entsprechend kleinerer Radius an der hinteren Krümmung, in Sitzrichtung gesehen, vorhanden.

In einer bevorzugten Ausführungsform mit verschiedenen Radien und vertikalen Führungsfläche mit einer, insbesondere kleinen Abweichung von der vertikalen Ausrichtung, ergibt sich eine vertauschsichere Ausgestaltung der Verbindungsvorrichtung, insbesondere eine fehlersichere Ausgestaltung der Steckverbindung. Vorteilhafterweise ist eine Fixierung der Steckverbindung nur in einer korrekten Position der Steckelemente ineinander möglich. Vorteilhafterweise erfolgt durch die Aufsteck-Schrägen am oberen Ende des ersten Steckelements eine Positionierung des zweiten Steckelements während des Zusammenfügens in Richtung der Breite der Steckverbindung bzw. in Richtung der Breite des Sitzteilers. Weiter ergibt sich durch die beiden Führungsflächen eine weitere Positionierung des zweiten Steckelements relativ zum ersten Steckelement beim Zusammenfügen in Richtung der Tiefe der Steckelemente bzw. in Richtung der Tiefe des Sitzteilers.

Bevorzugt weist das Strukturbauteil eine horizontale Fläche auf. Insbesondere ist die horizontale Fläche ein unteres Ende des Strukturbauteils. Beispielsweise ergibt sich die horizontale Fläche aus der Breite und der Tiefe des Strukturbauteils. Vorzugsweise ist die horizontale Fläche des Strukturbauteils annähernd parallel zum oberen Ende des ersten Steckelements ausgeführt.

In einer weiteren vorteilhaften Ausgestaltung weist das Strukturbauteil am unteren Ende, insbesondere im Bereich der horizontalen Fläche, eine überstehende Nase auf. Die überstehende Nase ist aus dem Strukturbauteil ausgeformt und/oder einstückig aus dem Strukturbauteil herstellbar. Ebenso ist es möglich die Nase mittels z.B. Schrauben und/oder Niete am Strukturbauteil zu fixieren. Beispielsweise ist die überstehende Nase in Sitzrichtung vor der Verbindungsvorrichtung am Strukturbauteil angeordnet.

In einer bevorzugten Ausführungsvariante weist das zweite Steckelement eine Anbindungsfläche auf, mit welcher das zweite Steckelement am Strukturbauteil angeordnet ist. Bevorzugt sind im Bereich der Anbindungsfläche Durchführungen für Niete und/oder Schrauben zur Anordnung, insbesondere zur Befestigung am Strukturbauteil vorhanden. Beispielsweise ist die Anbindungsfläche zur Fixierung am Strukturbauteil ausgebildet. Vorteilhafterweise handelt es sich bei der Anbindungsfläche um den oberen Abschnitt des zweiten Steckelements, bevorzugt beabstandet zur Zunge am zweiten Steckelement angeordnet. In einer vorteilhaften Ausführung grenzt die Zunge an die Anbindungsfläche an.

Bevorzugt weist das zweite Steckelement zwei Teile auf, welche z.B. jeweils aus einer Zunge und einer Anbindungsfläche gebildet sind.

Bevorzugterweise umfasst eine Sitzreihe mindestens zwei Fluggastsitze nach einer der vorhergehenden Ausgestaltungsmöglichkeiten. Beispielsweise sind in einer Sitzreihe zwei der oben beschriebenen Fluggastsitze angeordnet, insbesondere als Flugastsitz-Paar. Vorteilhafterweise ist das Fluggastsitz-Paar derart angeordnet, dass zwei Stützbeine, welche mit dem Kabinenboden, insbesondere mit Halterungen im Kabinenboden verbindbar sind, ausreichend sind. Beispielsweise sind die Stützbeine mit dem Holm miteinander verbunden, bevorzugt sind zwei Holme vorhanden. In einer vorteilhaften Variante werden die Stützbeine mittels einer Scheibennabenverbindung am Holm fixiert. Ebenso vorteilhaft sind die Sitzteiler an den Holmen anordenbar, so dass sich die Sitzreihe bilden lässt. Bevorzugt umfasst das Fluggastsitz-Paar vier Sitzteiler mit vier Verbindungsvorrichtungen, zur Anbindung von vier Strukturbauteilen.

### Figurenbeschreibung

Weitere vorteilhafte Merkmale, Ausgestaltungen, Varianten und Ausführungsformen sind anhand eines schematischen Ausführungsbeispiels näher erläutert.

Im Einzelnen zeigt:
- Figur 1: in einer perspektivischen Ansicht schräg von vorne eine Sitzreihe mit zwei Fluggastsitzen jeweils umfassend einen Sitzboden, eine Rückenlehne samt rückseitiger Umhausung und eine Beinauflage,
- Figur 2: die Sitzreihe gemäß Figur 1 in einer perspektivischen Ansicht von schräg hinten,
- Figur 3: ein Teil eines Gestells und mehrere Strukturbauteile der Sitzreihe aus Figur 1 in einer perspektivischen Ansicht von schräg vorne,
- Figur 4: die erfindungsgemäße Verbindungsvorrichtung in einer Detailansicht A aus Figur 3 in schräg seitlicher Ansicht,
- Figur 5: die Verbindungsvorrichtung aus Figur 4 in einem zusammengefügten Zustand in seitlich in schräg seitlicher Ansicht.

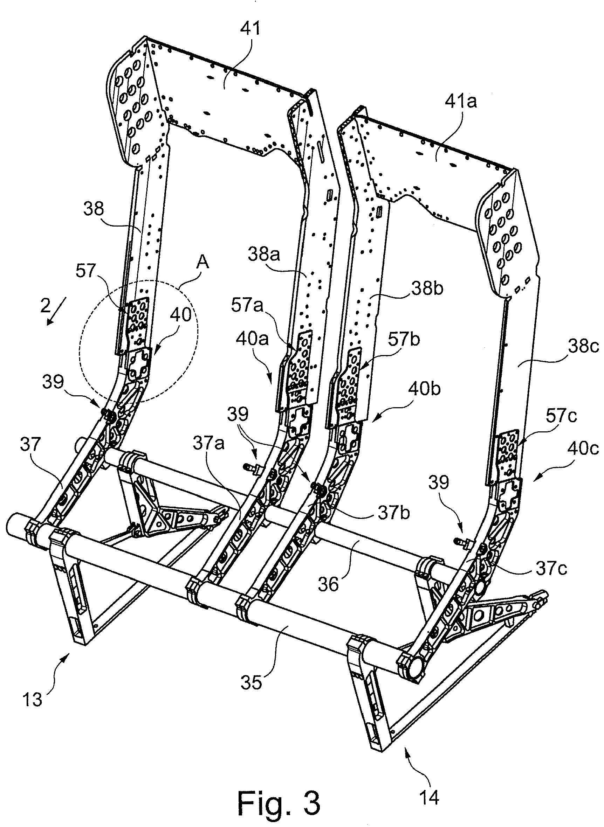

Für einen nutzbaren, funktionsfähigen Fluggastsitz sind weitere Bauteile notwendig, welche in den Figuren 3 bis 5 nicht dargestellt sind. Es wird nur auf die für die Verbindungsvorrichtung notwendigen Bauteile eingegangen.

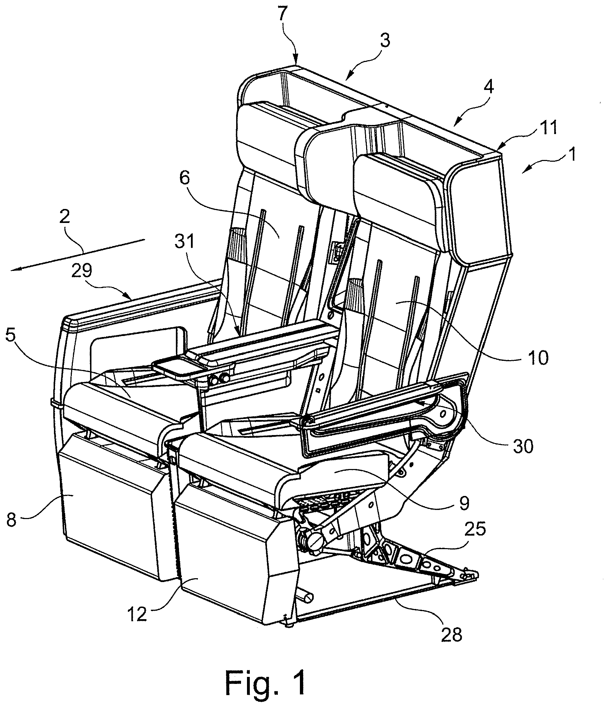

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Die Fluggastsitze 3 und 4 sind über zwei Stützbeine 13 und 14 an einem Kabinenboden einer Flugkabine eines dazugehörigen Flugzeuges montierbar.

Das Stützbein 13 weist hierfür an einem unteren Endbereich 16 einer vorderen Strebe 15 eine Montagestelle 17 und eine weitere Montagestelle 20 an einem unteren Endbereich 19 einer hinteren Strebe 18 auf. Zwischen den Endbereichen 16 und 19 ist ein Verstrebungselement 21 vorgesehen.

Das Stützbein 14 weist an einem unteren Endbereich 23 einer vorderen Strebe 22 eine Montagestelle 24 und eine weitere Montagestelle 27 an einem unteren Endbereich 26 einer hinteren Strebe 25 auf. Zwischen den Endbereichen 23 und 26 ist ein Verstrebungselement 28 vorgesehen.

Die Sitzreihe 1 weist zudem eine äußere Armlehne 29 seitlich am Fluggastsitz 3 und eine äußere Armlehne 30 seitlich am Fluggastsitz 4 auf. Zwischen den beiden Fluggastsitzen 3 und 4 ist vorzugsweise auf Höhe der beiden äußeren Armlehnen 29 und 30 eine Konsole 31 vorhanden, welche von einem Fluggast ebenfalls als Armauflage genutzt werden kann.

In einer Schalenform der jeweiligen Umhausung 7 bzw. 11 ist die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

Die Umhausungen 7 und 11 sind mit weiteren Elementen versehen, z. B. rückseitig jeweils mit Zusatzfunktionen versehen. In einem oberen rückseitigen Bereich der Umhausungen 7, 11 ist beispielsweise jeweils eine Multimedia-Einheit 32 für digitale Medien vorgesehen, zum Beispiel mit einem elektronischen Ein- und Ausgabegerät bzw. mit einem Touchscreen.

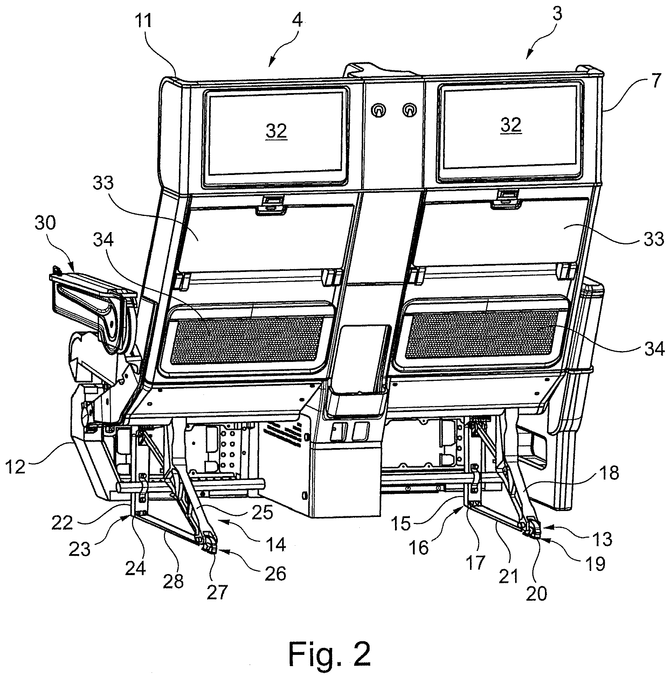

In einem unterhalb an die Multimedia-Einheit 32 anschließenden bzw. mittleren Bereich ist zum Beispiel jeweils ein klappbares Ablageelement 33 wie ein Tablett-Tisch mit einer Tischplatte ausgebildet. In Fig. 2 sind die Ablageelemente 33 in einer nach oben herangeklappten, vertikal stehenden und gesicherten Nichtnutzungsstellung dargestellt.

Unterhalb des jeweiligen klappbaren Ablageelements 33 ist ein Staufach 34 beispielswiese zur Unterbringung von Zeitschriften bzw. Prospekten oder anderen Gegenständen vorhanden.

Figur 3 zeigt eine perspektivische Ansicht einer Grundkonstruktion der Sitzreihe 1 der Fluggastsitze 3, 4. Die Grundkonstruktion umfasst insbesondere ein Gestell und mehrerer Strukturbauteile 38, 38a, 38b, 38c, 41 und 41a.

Beispielsweise sind am Gestell, welches die Stützbeine 13, 14, umfasst, zwei Holme 35, 36 angeordnet. Vorteilhafterweise sind der vordere Holm 35 und der hintere Holm 36 annäherungsweise parallel zueinander ausgerichtet. Bevorzugt ist an den Holmen 35 und 36 ein Sitzteiler 37 angeordnet. Bevorzugterweise sind zwei Sitzteiler 37, 37a für den Fluggastsitz 3 und die weiteren Sitzteiler 37b, 37c für den Fluggastsitz 4 vorhanden. Insbesondere weisen die Sitzteiler 37 bis 37c verschiedenen Materialausnehmungen auf. Die Sitzteiler 37, 37a, 37b, 37c sind vorzugsweise gleich, insbesondere identisch aufgebaut. Der Sitzteiler 37 ist insbesondere als flaches, winkliges, beispielsweise bogenförmiges Bauteil ausgeführt. Beispielsweise ist am oberen Ende des Sitzteilers 37 eine erfindungsgemäße Verbindungsvorrichtung 40 angeordnet.

Vorteilhafterweise ist über die Verbindungsvorrichtung 40 ein Strukturbauteil 38 an den Sitzteiler 37 angebunden. Ebenso ist über die Verbindungsvorrichtung 40a das Strukturbauteil 38a an den Sitzteiler 37a angebunden. Weiter ist mittels der Verbindungsvorrichtung 40b das Strukturbauteil 38b an den Sitzteiler 37b angebracht und ebenso das Strukturbauteil 38c mittels der Verbindungsvorrichtung 40c an den Sitzteiler 37c.

In der dargestellten Ausführungsform ist zum Beispiel an zwei Strukturbauteile 38, 38a ein Verbindungsstrukturbauteil 41 angeordnet. Bevorzugt ist das Verbindungsstrukturbauteil 41 an einem oberen Ende der vertikal ausgerichteten Strukturbauteile 38, 38a angebracht. Ein Verbindungsstrukturbauteil 41a ist zwischen den vertikal ausgerichteten Strukturbauteilen 38b und 38c angeordnet. Vorzugsweise wirkt das Verbindungsstrukturbauteil 41 bzw. 41a aussteifend und/oder mechanisch stabilisierend mit den beiden vertikalen Strukturbauteilen 38 und 38a, bzw. 38b und 38c zusammen. Beispielsweise sind das Verbindungsstrukturbauteil 41 und die Strukturbauteile 38, 38a mittels Verbindungsmitteln (nicht dargestellt), z.B. Winkeln und/oder Schrauben und/oder Niete miteinander verbunden. Alternativ ist eine einstückige Ausbildung der Strukturbauteile mit dem Verbindungsstrukturbauteil möglich. Für das Verbindungsstrukturbauteil 41a gilt entsprechendes.

Vorzugsweise ist das Verbindungsstrukturbauteil 41 bzw. 41a als ein plattenförmiges Element mit einer langen und einer kurzen Seite und einer Dicke ausgebildet. Beispielsweise ist das Verbindungsstrukturbauteil derart ausgerichtet, dass die lange Seite des Verbindungsstrukturbauteils 41 bzw. 41a in der horizontalen Richtung bezogen auf den Fluggastsitz angeordnet ist.

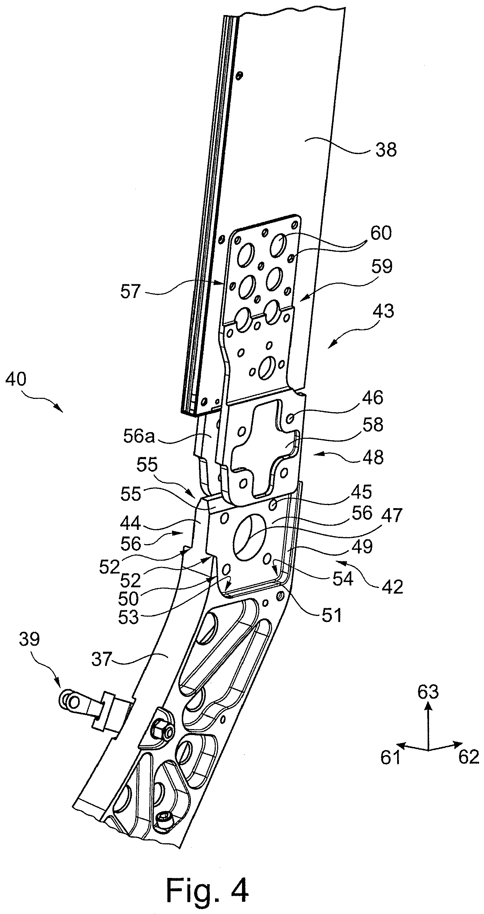

Die drei Raumrichtungen Breite 61, Tiefe 62, Höhe 63 sind in Figur 4 dargestellt und beziehen sich auf die Ausrichtung des Sitzteilers 37 bzw. 37a, bzw. 37b, bzw. 37c.

Beispielsweise ist gemäß Darstellung in Figur 3, jeweils rechts, bzw. links außen an dem Sitzteiler 37 bzw. 37c und am Strukturbauteil 38 bzw. 38c die Verbindungsvorrichtung 40 bzw. 40c angeordnet. Vorzugsweise ist an den mittig angeordneten Sitzteilern 37a bzw. 37b jeweils die Verbindungsvorrichtung 40a bzw. 40b angeordnet. Insbesondere unterscheiden sich die Verbindungsvorrichtungen 40 und 40c von den Verbindungsvorrichtungen 40a und 40b durch die Form der Anbindungsflächen 57 und 57c zu 57a und 57b.

Vorzugsweise unterscheiden sich die jeweils äußeren Strukturbauteile 38 bzw. 38c ebenfalls durch ihre Form von den jeweils inneren Strukturbauteilen 38a bzw. 38b. Beispielsweise ist am Strukturbauteil 38 am oberen Ende eine Verbreiterung vorhanden, während das Strukturbauteil 38a eine Verbreiterung am unteren Ende, im Bereich der Anbindungsfläche 57a aufweist.

In einer vorteilhaften Ausführungsform ist an jedem Sitzteiler 37, 37a, 37b, 37c eine Gurtanbindung 39 angeordnet, insbesondere sind alle vier angeordneten Gurtanbindungen 39 gleichartig ausgeführt. Beispielsweise ist die Gurtanbindung 39 an den Sitzteilern 37 bis 37c angeschraubt, vorteilhafterweise ist an der Gurtanbindung 39 ein Sicherheitsgurt mit insbesondere einem Gurtschloss und/oder einem auf das Gurtschloss abgestimmtem Haken und/oder Öse anbringbar.

In Figur 4 ist der Ausschnitt A aus Figur 3 vergrößert dargestellt. Die folgenden Ausführungen gelten für die Verbindungsvorrichtung 40, aber ebenso auch für die Verbindungsvorrichtungen 40a bis 40c.

Die Verbindungsvorrichtung 40 ist in Figur 4 in einem nicht zusammengefügten Zustand von Sitzteiler 37 und Strukturbauteil 38 gezeigt. Vorzugsweise umfasst die Verbindungsvorrichtung 40 ein erstes Steckelement 42 und ein zweites Steckelement 43.

Bevorzugterweise ist das erste Steckelement 42 an dem oberen, zum Strukturbauteil 38 hin ausgerichteten Ende des Sitzteilers 37 angeordnet. Beispielsweise ist das erste Steckelement 42 einstückig am Sitzteiler 37 ausgeformt, insbesondere aus dem Material des Sitzteilers z.B. ausgefräst bzw. durch fräsende Bearbeitung hergestellt, vorhanden. Vorteilhafterweise weist das erste Steckelement 42 zwei gegenüberliegende Ausnehmungen auf, welche sich auf beiden Seiten des Trennelements 44 befinden. Beispielsweise sind die Ausnehmungen ein flächiger Materialabtrag bis zu einer Tiefe T1, insbesondere sind beide Ausnehmungen gleich, so dass zwischen den Ausnehmungen das Trennelement 44 verbleibt. Insbesondere weisen die Ausnehmungen jeweils eine vertikal ausgerichtete Kontaktfläche 56 auf. Zum Beispiel ist die Kontaktfläche 56 auch eine Begrenzungsfläche des Trennelements 44, bevorzugt sind die Kontaktflächen 56 auf beiden Seiten des Trennelements 44 gleich ausgeführt. Vorteilhaft weist die Kontaktfläche 56 eine Tiefe und eine Höhe auf. Beide Richtungen sind in Bezug zur Ausrichtung des Sitzteilers bzw. des Fluggastsitzes angegeben.

Das Trennelement 44 weist zum Beispiel am oberen Ende eine Aufsteck-Schräge 55 auf. Bevorzugt ist die Aufsteck-Schräge 55 an einem oberen Endbereich der Kontaktfläche 56 ausgebildet. Beispielsweise ist die Aufsteck-Schräge 55 auf beiden Seiten des Trennelements 44 gleichartig ausgebildet, so dass die Aufsteck-Schrägen 55 am Trennelement 44 dachförmig ausgerichtet sind.

Beispielsweise sind am Trennelement 44 mehrere Durchführungen 45, z.B. ausgebildet als Schraublöcher, vorhanden. Bevorzugt sind vier Durchführungen 45 auf der Kontaktfläche 56 angeordnet, insbesondere symmetrisch, z.B. gemäß den Ecken eines Rechtecks und/oder Quadrats. Vorteilhafterweise ist bevorzugt in der Mitte der Kontaktfläche 56 ein, im Vergleich zu den Durchführungen 45 größeres, Loch 47 angeordnet, welches beispielsweise zur Gewichtsersparnis vorgesehen ist.

Jede der Kontaktflächen 56 wird an, zum Beispiel drei Seiten, von winklig zur Ebene der Kontaktfläche 56, abstehenden Flächen begrenzt, beispielsweise durch zwei vertikal ausgerichtete Führungsflächen 49 und 50 und eine horizontal ausgerichtete Verbindungsfläche 51.

Vorteilhafterweise sind die Führungsflächen 49 und 50 länglich und/oder streifenförmig ausgeführt, insbesondere sind sie in Längsrichtung vertikal ausgerichtet. Beispielsweise ist die Verbindungsfläche 51 länglich und/oder streifenförmig ausgebildet, insbesondere ist die Verbindungsfläche 51 in Längsrichtung horizontal in Bezug zum Fluggastsitz 3, 4 ausgerichtet.

Bevorzugt stehen die Führungsflächen 49 und 50 und die Verbindungsfläche 51 annähernd rechtwinklig von der Kontaktfläche 56 ab. Vorteilhafterweise ist die Führungsfläche 49 mit der Verbindungsfläche 51 über eine konkave Krümmung 54 mit z. B. einem Radius verbunden. Bevorzugt ist die Verbindungsfläche 51 mit der Führungsfläche 50 ebenfalls mit einer weiteren konkaven Krümmung 53 mit einem, insbesondere weiteren Radius verbunden.

In einer bevorzugten Ausführungsvariante ist die Führungsfläche 50 in Sitzrichtung gesehen vorne an der Kontaktfläche 56 ausgebildet. Vorzugsweise ist die Führungsfläche 50 annähernd vertikal oder mit nur einer geringen Abweichung zur vertikalen Richtung des Fluggastsitzes ausgebildet. Vorzugsweise sind die Führungsflächen 49 und 50 unterschiedlich in ihrer Abweichung zur vertikalen Richtung ausgebildet. Vorteilhafterweise ist die hintere Führungsfläche 49 höher als die vordere Führungsfläche 50 ausgebildet. Beispielsweise erstreckt sich die hintere Führungsfläche 49 über nahezu die gesamte Höhe der Kontaktfläche 56, während die vordere Führungsfläche 50 sich nur über einen Teil, insbesondere ungefähr die Hälfte der Höhe der Kontaktfläche 56 erstreckt.

Beispielsweise ist am oberen Ende der Führungsfläche 50 eine Anlaufschräge 52 angeordnet. Die Anlaufschräge 52 ist vorzugsweise als eine konvexe Krümmung, mit insbesondere einem Radius ausgebildet. Bevorzugt wird durch die Anlaufschräge 52 und die Aufsteck-Schrägen 55 in Verbindung mit der hinteren Führungskante 51 ein Aufsetzten des Strukturbauteils 38 auf den Sitzteiler 37 vereinfacht. In der dargestellten Ausführungsvariante ist der Radius zwischen vorderer Führungsfläche 50 und Verbindungsfläche 51 größer, als der Radius zwischen hinterer Führungsfläche 49 und Verbindungsfläche 51. Ebenso ist es umgekehrt möglich, oder auch, dass beide Radien gleich sind.

In einer vorteilhaften Ausführungsform ist am zweiten Steckelement 43 am unteren Ende zumindest eine Zunge 48 angeordnet, außenseitig am Strukturbauteil 38. Bevorzugterweise ist das zweite Steckelement 43 aus zwei gleichen Teilen aufgebaut, welche jeweils die Zunge 48 und eine Anbindungsfläche 57 aufweisen. Die Zungen 48 sind bevorzugt beabstandet am Strukturbauteil 38 angebracht. Weiter bevorzugt sind die Zungen 48 gleich ausgeführt.

Bevorzugterweise ist die Zunge 48 in ihrer Außenform, insbesondere mit einer Umrandungsfläche, auf die Führungsflächen 49, 50 und die Verbindungsfläche 51 derart abgestimmt, dass die Umrandungsflächen der Zunge 48 auf diesen Flächen 49, 50, 51 liegen, und/oder die Flächen 49, 50, 51 und die Umrandungsflächen der Zunge 48 formschlüssig zusammenwirken.

An der Zunge 48 ist beispielsweise eine einseitig, nach außen offene Materialausnehmung 58 angeordnet. Vorteilhafterweise dient die Materialausnehmung 58 zur Gewichtsreduktion.

Vorzugsweise ist gegenüber der Materialausnehmung, eine Kontaktfläche 56a an der Zunge 48 angeordnet, insbesondere ist die Seite der Zunge als die Kontaktfläche 56a ausgebildet, welche mit der Kontaktfläche 56 am ersten Steckelement 42 in Kontakt kommt. Bevorzugterweise ist die Kontaktfläche 56 mit der Kontaktfläche 56a in einem flächigen Kontakt, bzw. sind die beiden Kontaktflächen 56 und 56a in gegenseitiger Anlage, zumindest teilweise. Im Bereich der Zunge ist eine Durchführung 46 vorhanden, bevorzugt sind mehrere Durchführungen 46 vorhanden. Insbesondere sind gleich viele Durchführungen 46 wie Durchführungen 45 vorhanden, vorzugsweise jeweils für ein gemeinsames Verbindungsmittel.

Beispielsweise ist das zweite Steckelement 43 an der Anbindungsfläche 57 mit dem Strukturbauteil 38 verbunden. Bevorzugt weist ein oberer Bereich 59, welcher sich beispielsweise an die Zunge 48 anschließt, eine Durchführung 60 auf. Vorteilhafterweise sind mehrere Durchführungen 60, insbesondere gleichartige Durchführungen 60, für Niete und/oder Schrauben vorgesehen. In Figur 4 sind keine Niete und/oder Schrauben und/oder sonstige Verbindungsmittel dargestellt.

Ein vorteilhafter Ablauf beim Zusammenfügen der zwei Steckelemente 42 und 43 ist wie folgt:
Die zur hinteren Führungsfläche 49 korrespondierende, schmal- bzw. stirnseitige Umrandungsfläche der Zunge 48 wird durch die Führungsfläche 49, durch einen Anlagekontakt beim Aufsetzten, geführt. Durch die zwei Aufsteck-Schrägen 55 erfolgt eine Anpassung der Position, insbesondere Zentrierung von zweitem Steckelement 43 zu erstem Steckelement 42 in Richtung der Breite in Bezug zum Sitzteiler. Die Anlaufschräge 52 ermöglicht ein einfaches Einpassen der Zunge 48 mit der Kontaktfläche 56a auf die Kontaktfläche 56.

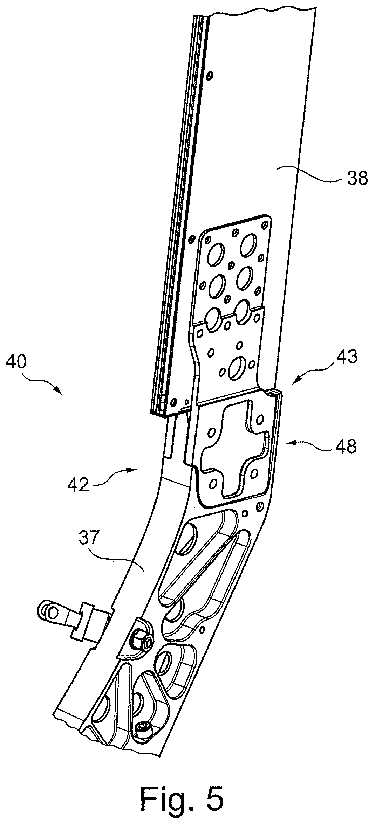

In Figur 5 ist die Verbindungsvorrichtung 40 in dem zusammengebauten Zustand gezeigt. Beispielsweise ist in der dargestellten Ausführungsform das zweite Steckelement 43 im Bereich der Kontaktfläche 56a auf das erste Steckelement 42 mit den Kontaktflächen 56 aufgesetzt. Insbesondere ist das Trennelement 44, bevorzugt vollständig, zwischen den beiden Zungen 48 eingetaucht und/oder versenkt, angeordnet. Die Abmessungen der beiden Zungen 48 sind derart gewählt, dass die beiden Zungen 48 in die Ausnehmungen am ersten Steckelement 42 einpassbar sind. Vorzugsweise füllen die Zungen 48 die Ausnehmungen am Sitzteiler 37 genau oder annähernd genau aus, insbesondere sind Zungen 48 derart in die Ausnehmungen eingepasst, dass von vorne in Bezug zur Sitzrichtung, eine Außenoberfläche der Zunge 48 bündig mit einer Außenoberfläche des Sitzteilers 37 ist.

Vorteilhafterweise ist das Trennelement 44 derart ausgebildet, dass seine Breite ungefähr 50% der Breite des Sitzteilers beträgt. Die Führungsflächen 49 und 50 und die Verbindungsfläche 51 weisen jeweils eine Breite von ungefähr 25% der Breite des Sitzteilers 37 auf.

Die Zunge 48 ist in der Breite auf die Breite der Führungsflächen bzw. die Breite der Ausnehmung am Sitzteiler 37 abgestimmt. Insbesondere ist die Breite der Zunge 48 ungefähr 25% der Breite des Sitzteilers 37.

Hierdurch ergibt sich vorteilhaft, dass die Verbindungsvorrichtung 40 im angeordneten Zustand der Breite des Sitzteilers 37 entspricht.

Für die Verbindungsvorrichtung 40a gilt gesagtes ebenso. Die Verbindungsvorrichtung 40 unterscheidet sich von der Verbindungsvorrichtung 40a nur durch die Anbindungsfläche 57 bzw. 57a. Die restlichen Merkmale sind entsprechend.

**Bezugszeichenliste**

| | | | |
|---|---|---|---|
| 1 | Sitzreihe | 36 | hinterer Holm |
| 2 | Sitzrichtung | 37 | Sitzteiler |
| 3 | Fluggastsitz | 37a | Sitzteiler |
| 4 | Fluggastsitz | 37b | Sitzteiler |
| 5 | Sitzboden | 37c | Sitzteiler |
| 6 | Rückenlehne | 38 | Strukturbauteil |
| 7 | Umhausung | 38a | Strukturbauteil |
| 8 | Beinauflage | 38b | Strukturbauteil |
| 9 | Sitzboden | 38c | Strukturbauteil |
| 10 | Rückenlehne | 39 | Gurtanbindung |
| 11 | Umhausung | 40 | Verbindungsvorrichtung |
| 12 | Beinauflage | 40a | Verbindungsvorrichtung |
| 13 | Stützbein | 40b | Verbindungsvorrichtung |
| 14 | Stützbein | 40c | Verbindungsvorrichtung |
| 15 | Strebe | 41 | Verbindungsstruktur-bauteil |
| 16 | Endbereich | | |
| 17 | Montagestelle | 41a | Verbindungsstruktur-bauteil |
| 18 | Strebe | | |
| 19 | Endbereich | 42 | erstes Steckelement |
| 20 | Montagestelle | 43 | zweites Steckelement |
| 21 | Verstrebungselement | 44 | Trennelement |
| 22 | Strebe | 45 | Durchführung |
| 23 | Endbereich | 46 | Durchführung |
| 24 | Montagestelle | 47 | Loch |
| 25 | Strebe | 48 | Zunge |
| 26 | Endbereich | 49 | Führungsfläche |
| 27 | Montagestelle | 50 | Führungsfläche |
| 28 | Verstrebungselement | 51 | Verbindungsfläche |
| 29 | Armlehne | 52 | Anlaufschräge |
| 30 | Armlehne | 53 | Krümmung |
| 31 | Konsole | 54 | Krümmung |
| 32 | Multimedia-Einheit | 55 | Aufsteck-Schräge |
| 33 | Ablageelement | 56 | Kontaktfläche |
| 34 | Staufach | 56a | Kontaktfläche |
| 35 | vorderer Holm | 57 | Anbindungsfläche |
| 57a | Anbindungsfläche | 60 | Durchführung |
| 57b | Anbindungsfläche | 61 | Breite |
| 57c | Anbindungsfläche | 62 | Tiefe |
| 58 | Materialausnehmung | 63 | Höhe |
| 59 | oberer Bereich | | |

## Patentansprüche

1. Fluggastsitz (3, 4) mit einem Gestell, das zur Befestigung an einem Boden einer Fluggastkabine vorgesehen ist, wobei das Gestell einen Sitzteiler (37, 37a, 37b, 37c) und quer zur Sitzrichtung verlaufende Holme (35, 36) umfasst, wobei der Sitzteiler (37, 37a, 37b, 37c) durch die Holme (35, 36) gehalten ist, wobei eine Umhausung (7, 11) mit einem Strukturbauteil (38, 38a, 38b, 38c, 41, 41a, 42, 42a) vorgesehen ist, wobei die Umhausung (7, 11) des Fluggastsitz (3, 4) eine Rückenlehne (6, 10) des Fluggastsitz (3, 4) zumindest teilweise umgibt, wobei die Umhausung (7, 11) fest am Sitzteiler (37, 37a, 37b, 37c) angeordnet ist, wobei die Rückenlehne (6, 10) im Bereich der Umhausung (7, 11) relativ zur Umhausung (7, 11) verstellbar ist, wobei der Sitzteiler (37, 37a, 37b, 37c) mit dem Strukturbauteil (38, 38a, 38b, 38c) über eine Verbindungsvorrichtung (40, 40a, 40b, 40c) verbunden ist, wobei die Verbindungsvorrichtung (40, 40a, 40b, 40c) als eine Steckverbindung ausgebildet ist.

2. Fluggastsitz (3, 4) nach Anspruch 1, **dadurch gekennzeichnet, dass** die Verbindungsvorrichtung (40, 40a, 40b, 40c) ein erstes Steckelement (42) umfasst und ein zweites Steckelement (43) umfasst, wobei das erste Steckelement (42) am Sitzteiler (38, 38a, 38b, 38c) angeordnet ist und das zweite Steckelement (43) am Strukturbauteil (38, 38a, 38b, 38c) angeordnet ist.

3. Fluggastsitz (3, 4) nach einem der vorhergehenden Ansprüche, **dadurch gekennzeichnet, dass** die Verbindungsvorrichtung (40, 40a, 40b, 40c) als eine Art Nut-und-Feder-Verbindung ausgebildet ist.

4. Fluggastsitz (3, 4) nach Anspruch 2 oder Anspruch 3 abhängig von Anspruch 2, **dadurch gekennzeichnet, dass** das erste Steckelement (42) am Sitzteiler (37, 37a, 37b, 37c) angeordnet ist, wobei das erste Steckelement (42) eine Ausnehmung umfasst, wobei die Ausnehmung in Sitzrichtung gesehen eine Tiefe von mindestens 50% der Tiefe des Sitzteilers (37, 37a, 37b, 37c) aufweist.

5. Fluggastsitz (3, 4) nach Anspruch 2 oder einem der vorhergehenden Ansprüche 3-4 abhängig von Anspruch 2, **dadurch gekennzeichnet, dass** das zweite Steckelement (43) eine Zunge (48) umfasst.

6. Fluggastsitz (3, 4) nach Anspruch 2 oder einem der vorhergehenden Ansprüche 3-5 abhängig von Anspruch 2 , **dadurch gekennzeichnet, dass** das zweite Steckelement (43) zwei Zungen (48) umfasst, wobei die Zungen (48) beabstandet voneinander am Strukturbauteil (38, 38a, 38b, 38c) angeordnet sind.

7. Fluggastsitz (3, 4) nach Anspruch 5 abhängig von Anspruch 4 oder Anspruch 6 abhängig von Anspruch 4 **dadurch gekennzeichnet, dass** die Zunge (48) eine Länge aufweist, welche 50% bis 150% der Tiefe der Ausnehmung am ersten Steckelement (42) beträgt.

8. Fluggastsitz (3, 4) nach Anspruch 2 oder einem der vorhergehenden Ansprüche 3-7 abhängig von Anspruch 2, **dadurch gekennzeichnet, dass** das erste Steckelement (42) eine Führungsfläche (49, 50, 51) umfasst.

9. Fluggastsitz (3, 4) nach Anspruch 2 oder einem der vorhergehenden Ansprüche 3-8 abhängig von Anspruch 2, **dadurch gekennzeichnet, dass** das erste Steckelement (42) mehrere Führungsflächen (49, 50, 51) umfasst, insbesondere zwei, welche gegenüberliegend zueinander ausgebildet sind.

10. Fluggastsitz (3, 4) nach Anspruch 2 oder einem der vorhergehenden Ansprüche 3-9 abhängig von Anspruch 2, **dadurch gekennzeichnet, dass** die zwei Steckelemente (42, 43) im angeordneten Zustand ungefähr die gleiche Breite aufweisen wie der Sitzteiler (37, 37a, 37b, 37c).

11. Fluggastsitz (3, 4) nach Anspruch 4 oder einem der vorhergehenden Ansprüche 5-10 abhängig von Anspruch 4, **dadurch gekennzeichnet, dass** das erste Steckelement (42) im Bereich der Ausnehmung eine Breite von 50% der Breite des Sitzteilers (37, 37a, 37b, 37c) aufweist.

12. Fluggastsitz (3, 4) nach 3 Anspruch 4 oder einem der vorhergehenden Ansprüche 5-11 abhängig von Anspruch 4, **dadurch gekennzeichnet, dass** das erste Steckelement (42) ein oberes und ein unteres Ende umfasst, wobei das obere Ende mindestens eine abgeschrägte Fläche (55) umfasst und das untere Ende eine zur Fläche der Ausnehmung abstehende Fläche (51) ist.

13. Fluggastsitz (3, 4) nach Anspruch 2 oder einem der vorhergehenden Ansprüche 3-12 abhängig von Anspruch 2, **dadurch gekennzeichnet, dass** das zweite Steckelement (43) eine Anbindungsfläche (57, 57a, 57b, 57c) aufweist mit welcher das zweite Steckelement (43) am Strukturbauteil (38, 38a, 38b, 38c) angeordnet ist.

14. Sitzreihe (1) mit mindestens zwei Fluggastsitzen (3, 4) nach einem der vorhergehenden Ansprüche.

## Claims

1. Aircraft passenger seat (3, 4) having a frame which is provided for fastening to a floor of an aircraft passenger cabin, wherein the frame comprises a seat divider (37, 37a, 37b, 37c) and cross rails (35, 36) running transversely with respect to the sitting direction, wherein the seat divider (37, 37a, 37b, 37c) is held by the cross rails (35, 36), wherein a housing (7, 11) is provided with a structural component (38, 38a, 38b, 38c, 41, 41a, 42, 42a), wherein the housing (7, 11) of the aircraft passenger seat (3, 4) at least partially surrounds a backrest (6, 10) of the aircraft passenger seat (3, 4), wherein the housing (7, 11) is arranged fixedly on the seat divider (37, 37a, 37b, 37c), wherein the backrest (6, 10) is adjustable relative to the housing (7, 11) in the region of the housing (7, 11), wherein the seat divider (37, 37a, 37b, 37c) is connected to the structural component (38, 38a, 38b, 38c) via a connecting device (40, 40a, 40b, 40c), the connecting device (40, 40a, 40b, 40c) being designed as a plug-in connection.

2. Aircraft passenger seat (3, 4) according to Claim 1,
**characterized in that** the connecting device (40, 40a, 40b, 40c) comprises a first plug-in element (42) and comprises a second plug-in element (43), the first plug-in element (42) being arranged on the seat divider (38, 38a, 38b, 38c) and the second plug-in element (43) being arranged on the structural component (38, 38a, 38b, 38c).

3. Aircraft passenger seat (3, 4) according to either of the preceding claims, **characterized in that** the connecting device (40, 40a, 40b, 40c) is designed as a type of tongue-and-groove connection.

4. Aircraft passenger seat (3, 4) according to Claim 2 or Claim 3 depending on Claim 2, **characterized in that** the first plug-in element (42) is arranged on the seat divider (37, 37a, 37b, 37c), the first plug-in element (42) comprising a recess, and the recess having a depth of at least 50% of the depth of the seat divider (37, 37a, 37b, 37c), as seen in the sitting direction.

5. Aircraft passenger seat (3, 4) according Claim 2 or one of the preceding Claims 3-4 depending on Claim 2, **characterized in that** the second plug-in element (43) comprises a tongue (48).

6. Aircraft passenger seat (3, 4) according to Claim 2 or one of the preceding Claims 3-5 depending on Claim 2, **characterized in that** the second plug-in element (43) comprises two tongues (48), the tongues (48) being arranged spaced apart from each other on the structural component (38, 38a, 38b, 38c).

7. Aircraft passenger seat (3, 4) according to Claim 5 depending on Claim 4 or Claim 6 depending on Claim 4, **characterized in that** the tongue (48) has a length which is 50% to 150% of the depth of the recess on the first plug-in element (42).

8. Aircraft passenger seat (3, 4) according to Claim 2 or one of the preceding Claims 3-7 depending on Claim 2, **characterized in that** the first plug-in element (42) comprises a guide surface (49, 50, 51).

9. Aircraft passenger seat (3, 4) according to Claim 2 or one of the preceding Claims 3-8 depending on Claim 2, **characterized in that** the first plug-in element (42) comprises a plurality of guide surfaces (49, 50, 51), in particular two, which are formed lying opposite one another.

10. Aircraft passenger seat (3, 4) according to Claim 2 or one of the preceding Claims 3-9 depending on Claim 2, **characterized in that** the two plug-in elements (42, 43) in the arranged state have approximately the same width as the seat dividers (37, 37a, 37b, 37c).

11. Aircraft passenger seat (3, 4) according to Claim 4 or one of the preceding Claims 5-10 depending on Claim 4, **characterized in that** the first plug-in element (42) in the region of the recess has a width of 50% of the width of the seat divider (37, 37a, 37b, 37c).

12. Aircraft passenger seat (3, 4) according to Claim 4 or one of the preceding Claims 5-11 depending on Claim 4,
**characterized in that** the first plug-in element (42) comprises an upper and a lower end, the upper end comprising at least one bevelled surface (55) and the lower end being a surface (51) protruding with respect to the surface of the recess.

13. Aircraft passenger seat (3, 4) according to Claim 2 or one of the preceding Claims 3-12 depending on Claim 2,
**characterized in that** the second plug-in element (43) has an attachment surface (57, 57a, 57b, 57c) by which the second plug-in element (43) is arranged on the structural component (38, 38a, 38b, 38c).

14. Row of seats (1) having at least two aircraft passenger seats (3, 4) according to one of the preceding claims.

## Revendications

1. Siège passager d'aéronef (3, 4) comportant un cadre qui est destiné à être fixé à un plancher d'une cabine de passagers d'aéronef, le cadre comprenant un séparateur de sièges (37, 37a, 37b, 37c) et des barres (35, 36) s'étendant transversalement à la direction de siège, le séparateur de sièges (37, 37a, 37b, 37c) étant maintenu par les barres (35, 36), un logement (7, 11) comportant un composant structural (38, 38a, 38b, 38c, 41, 41a, 42, 42a) étant prévu, le logement (7, 11) du siège passager d'aéronef (3, 4) entourant au moins partiellement un dossier (6, 10) du siège passager d'aéronef (3, 4), le logement (7, 11) étant disposé fixement sur le séparateur de sièges (37, 37a, 37b, 37c), le dossier (6, 10) étant déplaçable par rapport au logement (7, 11) dans la région du logement (7, 11), le séparateur de sièges (37, 37a, 37b, 37c) étant relié au composant structural (38, 38a, 38b, 38c) par le biais d'un dispositif de liaison (40, 40a, 40b, 40c), le dispositif de liaison (40, 40a, 40b, 40c) étant réalisé sous la forme d'une liaison enfichable.

2. Siège passager d'aéronef (3, 4) selon la revendication 1, **caractérisé en ce que** le dispositif de liaison (40, 40a, 40b, 40c) comprend un premier élément enfichable (42) et comprend un deuxième élément enfichable (43), le premier élément enfichable (42) étant disposé sur le séparateur de sièges (38, 38a, 38b, 38c) et le deuxième élément enfichable (43) étant disposé sur le composant structural (38, 38a, 38b, 38c).

3. Siège passager d'aéronef (3, 4) selon l'une des revendications précédentes, **caractérisé en ce que** le dispositif de liaison (40, 40a, 40b, 40c) est réalisé sous la forme d'une liaison à rainure et languette.

4. Siège passager d'aéronef (3, 4) selon la revendication 2 ou la revendication 3 dépendant de la revendication 2, **caractérisé en ce que** le premier élément enfichable (42) est disposé sur le séparateur de sièges (37, 37a, 37b, 37c), le premier élément enfichable (42) comprenant un évidement, l'évidement présentant, vu dans la direction de siège, une profondeur d'au moins 50% de la profondeur du séparateur de sièges (37, 37a, 37b, 37c) .

5. Siège passager d'aéronef (3, 4) selon la revendication 2 ou l'une des revendications précédentes 3 et 4 dépendant de la revendication 2, **caractérisé en ce que** le deuxième élément enfichable (43) comprend une languette (48).

6. Siège passager d'aéronef (3, 4) selon la revendication 2 ou l'une des revendications précédentes 3 à 5 dépendant de la revendication 2, **caractérisé en ce que** le deuxième élément enfichable (43) comprend deux languettes (48), les languettes (48) étant disposées de manière espacée l'une de l'autre sur le composant structural (38, 38a, 38b, 38c).

7. Siège passager d'aéronef (3, 4) selon la revendication 5 dépendant de la revendication 4 ou selon la revendication 6 dépendant de la revendication 4, **caractérisé en ce que** la languette (48) présente une longueur, laquelle vaut de 50% à 150% de la profondeur de l'évidement sur le premier élément enfichable (42).

8. Siège passager d'aéronef (3, 4) selon la revendication 2 ou l'une des revendications précédentes 3 à 7 dépendant de la revendication 2, **caractérisé en ce que** le premier élément enfichable (42) comprend une surface de guidage (49, 50, 51).

9. Siège passager d'aéronef (3, 4) selon la revendication 2 ou l'une des revendications précédentes 3 à 8 dépendant de la revendication 2, **caractérisé en ce que** le premier élément enfichable (42) comprend plusieurs surfaces de guidage (49, 50, 51), en particulier deux, lesquelles sont réalisées en regard l'une de l'autre.

10. Siège passager d'aéronef (3, 4) selon la revendication 2 ou l'une des revendications précédentes 3 à 9 dépendant de la revendication 2, **caractérisé en ce que** les deux éléments enfichables (42, 43) présentent, dans l'état agencé, approximativement la même largeur que le séparateur de sièges (37, 37a, 37b, 37c).

11. Siège passager d'aéronef (3, 4) selon la revendication 4 ou l'une des revendications précédentes 5 à 10 dépendant de la revendication 4, **caractérisé en ce que** le premier élément enfichable (42) présente, dans la région de l'évidement, une largeur de 50% de la largeur du séparateur de sièges (37, 37a, 37b, 37c).

12. Siège passager d'aéronef (3, 4) selon la revendication 4 ou l'une des revendications précédentes 5 à 11 dépendant de la revendication 4, **caractérisé en ce que** le premier élément enfichable (42) comprend une extrémité supérieure et une extrémité inférieure, l'extrémité supérieure comprenant au moins une surface biseautée (55) et l'extrémité inférieure étant une surface (51) faisant saillie par rapport à la surface de l'évidement.

13. Siège passager d'aéronef (3, 4) selon la revendication 2 ou l'une des revendications précédentes 3 à 12 dépendant de la revendication 2, **caractérisé en ce que** le deuxième élément enfichable (43) présente une surface de connexion (57, 57a, 57b, 57c) par laquelle le deuxième élément enfichable (43) est disposé sur le composant structural (38, 38a, 38b, 38c).

14. Rangée de sièges (1) comportant au moins deux sièges passagers d'aéronef (3, 4) selon l'une des revendications précédentes.
